Europäisches Patentamt

(19) European Patent Office    (11) Publication number:    0 184 288

Office européen des brevets    A1

(12) EUROPEAN PATENT APPLICATION

(21) Application number: 85306990.4    (51) Int. Cl.⁴: **A 01 N 63/00**

(22) Date of filing: **01.10.85**

(30) Priority: 23.10.84 GB 8426729
23.10.84 GB 8426730
23.10.84 GB 8426731

(43) Date of publication of application:
11.06.86 Bulletin 86/24

(84) Designated Contracting States:
AT BE CH DE FR GB IT LI LU NL SE

(71) Applicant: FBC LIMITED
Hauxton
Cambridge CB2 5HU(GB)

(72) Inventor: Corbett, John Roger
Waverley House Cardinals Green
Horseheath Cambridge CB1 6QY(GB)

(72) Inventor: Wright, Kenneth
47 Longmeadow
Lode Cambridge CB5 9HA(GB)

(74) Representative: Wells, Norman David et al,
FBC LIMITED Industrial Property Department
Chesterford Park Research Station
Saffron Walden Essex CB10 1XL(GB)

(54) Herbicides, insecticides and fungicides.

(57) The use, in herbicidal, insecticidal, acaricidal or fungicidal methods and compositions, of enzymes capable of degrading a protecting or supporting component of the target organism.

84/26729

Herbicides, Insecticides and Fungicides

This invention concerns compounds which possess herbicidal, insecticidal, acaricidal or fungicidal activity, compositions containing them, and methods of using them.

Hitherto, herbicidal, insecticidal, acaricidal and fungicidal compounds have usually been of relatively simple chemical structure in order that their production may be comparatively inexpensive. Little work has been carried out on higher molecular weight synthetic compounds (say above a molecular weight of 1000), or on naturally-occurring compounds.

We have now found that a particular group of high molecular weight compounds, namely certain enzymes, surprisingly possess herbicidal, insecticidal, acaricidal or fungicidal activity.

Accordingly, in one aspect, this invention provides the use, in herbicidal, insecticidal, acaricidal or fungicidal methods and compositions, of enzymes capable of degrading a protecting or supporting component of the target organism.

In another aspect, the invention provides a herbicidal, insecticidal, acaricidal or fungicidal composition which comprises an enzyme capable of degrading a protecting or supporting component of a plant, insect or fungal organism, in association with one or more surface active agents, humectants or carriers.

In a further aspect, the invention provides a method of combating weeds, insects, acarids or fungi, which comprises applying thereto an effective amount of one or more enzymes capable of degrading a protecting or supporting component thereof.

The term 'protecting or supporting component' as used herein includes any component of the plant, insect, acarid or fungal organism which acts in a physically supportive or structural manner, including cell walls, membranes, waxy or lipid layers etc. The term 'capable of degrading' is used herein to include such effects as increasing permeability and reducing resistance as well as complete or partial destruction. Much information is available in the literature concerning the chemical structures of such protecting or supporting components, and the enzymes of the invention will in general be those which degrade the linkages which are known to be present. Since most commercially-available enzyme preparations are complex mixtures which may contain other active ingredients, this invention only relates to those where activity is substantially reduced by heating to denature any protein material which is present. As this technique denatures enzymic material, it is a reliable indicator that the activity observed in the untreated formulation is truly enzymic, particularly where activity in the denatured formulation is less than half of that observed with the untreated formulation.

Preferred herbicidally-active enzymes are hydrolase enzymes, eg polysaccharidases, lipases, proteinases and esterases, for example cellulases, cutinases, pectinases, α-glucosidases, ß-glucosidases, α-galactosidases, ß-galactosidases, ß-glucuronidases, ß-glucanases, dextranases, lipases, phospholipases, renins, trypsins and ficins.

For herbicidal use, particular benefits are obtained when a polysaccharidase and a lipase, proteinase or esterase are used in combination. We prefer the enzymes cellulase, amyloglucosidase, α-galactosidase, lipoxidase, lactase, ß-glucanase, renins and pectinase, especially cellulase, ß-glucanase and pectinase.

Preferred enzymes for insecticidal or acaricidal use are hydrolase enzymes. eg polysaccharidases, lipases, proteinases and esterases, for example chitinases, cutinases, α-glucosidases, ß-glucosidases, α-galactosidases, ß-glucuronidases, ß-glucanases, collagenases, lipases, phospholipases, renins, trypsins and ficins. Of these, we prefer chitinase and collagenase.

Preferred fungicidally-active enzymes are hydrolase enzymes. eg polysaccharidases, lipases, proteinases and esterases, for example cellulases, chitinases, pectinases, lysozymes, α-glucosidases, ß-glucosidases, α-galactosidases, ß-galactosidases, ß-glucuronidases, ß-glucanases, dextranases, collagenases, lipases, phospholipases, renins, trypsins and ficins. Of these, we prefer lysozyme, trypsins and proteinases.

The herbicidally-active enzymes are active against a wide range of plant species, particularly broadleaf plants. They are preferably applied post-emergence. Typical plant species against which the enzymes are active include Stellaria, Galium, Chrysanthemum, Abutilon, Ipomoea, Xanthium, Alopecurus, Avena, Agropyron, Echinochloa, Polygonum, Setaria and Cyperus.

The insecticidally- and acaricidally-active enzymes are active for example against Plutella, Tetranychus, Megoura, Spodoptera, Nilaparvata, Diabrotica, Musca, Lucilia and Boophilus species. The acaricidally-active enzymes have particular activity as acarid, especially mite, ovicides.

The fungicidally-active enzymes are active for example against Pyricularia, Puccinia, Phytophthora and Erysiphe species.

The enzymes may, if desired be employed in immobilised or granulated form.

The rates at which each enzyme is active depend upon the desired effect, the target species, the formulation used, and the conditions under which it is employed. It is very difficult therefore to give general guidance as to the effective rates. However, with suitable routine experimentation, it is possible to optimise the rate employed in any given circumstances.

The enzymes themselves are commercially available from a variety of sources. Many are produced by microbiological processes which are, at least potentially, inexpensive. Being natural products, they are of low mammalian toxicity. Their use accordingly provides substantial advantages over conventional synthetic pesticides.

The active enzymes are normally employed in the form of compositions containing one or more surface active agents, humectants or carriers.

The compositions usually contain from 0.01 to 99% by weight of the present enzymes, and are normally produced initially as concentrates containing from 0.5 to 99%, preferably from 0.5 to 85%, and especially from 10 to 50% by weight thereof. Such concentrates are diluted if necessary before application to the locus to be treated such that the active ingredient comprises from 0.01 to 5% by weight of the formulation applied.

The carrier may be water, in which case an organic solvent may also be present, though this is not usually employed.　　The carrier may alternatively be a water immiscible organic solvent, e.g. a hydrocarbon which boils within the range 130-270°C, e.g. xylene, in which the material is dissolved or suspended. An emulsifiable concentrate containing a water immiscible solvent may be formed with a surface active agent so that the concentrate acts as a self-emulsifiable oil on admixture with water.

The carrier may alternatively be a water-miscible organic solvent e.g. 2-methoxy ethanol, methanol, propylene glycol, diethylene glycol, diethylene glycol monoethyl ether, methylformamide or dimethylformamide.

The carrier may alternatively be a solid, which may be finely divided or granular. Examples of suitable solids are limestone, clays, sand, mica, chalk, attapulgite, diatomite, perlite, sepiolite, silicas, silicates, lignosulphonates and solid fertilizers. The carrier can be of natural or synthetic origin or can be modified natural material.

Wettable powders soluble or dispersible in water may be formed by admixing the material in particulate form with a particulate carrier or spraying dissolved compound on to the particulate carrier, admixing a wetting agent and a dispersing agent and finely grinding the whole powder mixture.

An aerosol composition may be formed by admixing the compound with a propellant, e.g. a polyhalogenated alkane such as dichlorofluoromethane, and suitably also with a solvent.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with a fatty alcohol ethoxylate, or salts of such esters, fatty alcohol sulphates such as sodium dodecyl sulphate, ethoxylated fatty alcohol sulphates, ethoxylated alkylphenol sulphates, lignin sulphates, petroleum sulphonates, alkylaryl sulphonates such as alkyl-benzene sulphonates or lower alkylnaphthalene sulphonates, salts of sulphonated naphthaleneformaldehyde condensates, salts of sulphonated phenolformaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products or fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthaleneformaldehyde condensates, salts of sulphonated phenolformaldehyde condensates, sodium oleoyl N-methyltauride, dialkyl sulphosuccinates, alkyl phenol ethoxylates, and fatty alkyl ethoxylates.

The invention is illustrated by the following Examples.

EXAMPLE 1

Herbicidal Activity

Seeds of field bean (Vicia faba) were sown in large aluminium trays containing John Innes potting compost and were grown for 1-2 weeks in a glasshouse. Approximately 4 days before treatment single plants were repotted into 7 x 7 cm square pots containing more potting compost, and were transferred to controlled environment rooms (20°C, 75-95% relative humidity, 14 hours per day artificial illumination at 8000 lux). Seeds of all other plant species tested were sown in anodised aluminium pans 19 cm long by 9.5 cm wide containing sterilised sandy loam, and were then maintained in a controlled environment room.

Treatment was carried out when most plants had 2 or 3 true leaves (14 or 21 days after sowing dependent on the species). The enzyme preparations listed below, together with corresponding denatured controls produced by autoclaving the enzyme preparation at 120°C for 15 minutes, removing precipitated protein by centrifugation (18000 x g. for 10 minutes) and adjusting the volume of the supernatant liquid to the original volume, were applied by hand sprayer to the foliage of the plant species to near run-off. All solutions employed contained Tween 20 wetting agent at a concentration of 1% by volume. Herbicidal responses were assessed over the following 14 days growth in the controlled environment room, and were scored according to an index where 0 = no effect, 1 = very slight effect, 2 = slight effect, 3 = moderate effect, and 4 = complete kill.

The results obtained were as follows:

| | Pectinase (Sigma) P5146 97 units/ml | Pectinase (Novo) Ultrazym 100G 3750 units/g | β-Glucanase (Novo) Finizym 200L 200 units/g |
|---|---|---|---|
| Rate | Neat | 0.223g/ml | 67% v/v |
| Polygonum lapathifolium | 2 | 2 | 2 |
| Galium aparine | - | 2 | - |
| Chrysanthemum segetum | 3 | 3 | 2 |
| Avena fatua | - | - | 2 |
| Abutilon theophrasti | 2 | 1 | - |
| Ipomoea annua | 4 | 0 | 2 |

Setaria

  viridis        -           -           2

Vicia

  fabae        4           4           4

The denatured controls in the corresponding tests all gave a reduction in activity of at least 50%.

EXAMPLE 2

Insecticidal Activity

(a) 1 ml of a 1mg/ml solution of the chitinase preparation C1650 from Sigma Chemical Company and its corresponding denatured control prepared as in Example 1 were pipetted onto 10 ml of synthetic diet contained in small plastic pots. Approximately 6 hours after treatment 20-30 larvae of sheep blowfly (Lucilia sericata) were introduced, and the pots were capped and maintained in the light. 48 Hours after infestation, the percentage mortality was recorded and the diet was then placed in larger pots containing perlite. The numbers of adult flies was then assessed 2-3 weeks later. 80% mortality was observed after 48 hours in the treatment with the active enzyme preparation compared with 0% with the denatured control.

(b) Enzyme preparations as set out below were applied by hand sprayer to leaf discs cut from French bean plants (Phaseolus vulgaris) to near run-off. The discs were then infested with 50-100 eggs of the red spider mite (Tetranychus cinnabarinus) and were held for 7 days at 22°C on moist filter paper. The percentage mortality of the eggs was then assessed as follows:

|  | Chitinase Sigma C1650 2 units/mg | Collagenase Sigma C9891 245 units/mg |
|---|---|---|
| Rate | 1 mg/ml | 1 mg/ml |
| Mortality | 100% | 100% |

Mortality in controls treated with denatured enzyme preparations produced as in Example 1 was less than 25%.

EXAMPLE 3

Fungicidal Activity

Host plants were grown singly in 7 x 7 cm square pots and their foliage was treated with the following enzyme preparations by hand sprayer to near run-off. All preparations contained Tween 20 and Pluronic L61 wetting agents at concentrations of 1% and 0.1% v/v respectively. 24 Hours after application, pots were inoculated with fungal pathogens as set out below:

(a) potato blight (Phytophthora infestans) was inoculated to treated tomato plants (Lycopersicon

esculentum) by spray application of a spore suspension (20000/ml), followed by incubation under clear polyethylene covers for 24 hours at greater than 98% relative humidity in a controlled environment room (17 hours per day artificial illumination at 8000 lux at 23°C, nighttime temperature 15°C). Disease levels were assessed after 3 days.

(b) Brown rust (Puccinia recondita) was inoculated to treated wheat (Triticum aestivum) seedlings by spray application of a suspension of uredospores (50000 - 200000/ml, containing additional Tween 20 and Pluronic L61 wetting agents at 125 mg and 1 g per litre respectively). The plants were then incubated under clear polyethylene covers for 24 hours at greater than 98% relative humidity in a controlled environment room (16 hours per day artificial illumination at 8000 lux at 23°C, nighttime temperature 21°C). The covers were then removed and disease level assessed on the first leaf after a further 12 days.

Fungicidal response was scored in both cases according to an index where 0 = 0 to 24% control, 1 = 24 to 49% control, 2 = 50 to 74% control, 3 = 75-97% control, and 4 = 98 to 100% control.

Results obtained were as follows:

|  | Lysozyme | Trypsin | Proteinase |
|---|---|---|---|
|  | Sigma L6876 | Sigma T2395 | Novo Savinase |
|  | 39 units/ug | 13.9 units/ug | 8.0L 8 units/g |
| Rate | 2 mg/ml | 10 mg/ml | 0.1 g/ml |
| P recondita | 3 | 3 | 3 |
| P infestans | 1 | - | 3 |

Denatured controls in the above tests each gave a reduction in activity of at least 50%.

CLAIMS

1. The use, in herbicidal, insecticidal, acaricidal or fungicidal methods and compositions, of enzymes capable of degrading a protecting or supporting component of the target organism.

2. A herbicidal, insecticidal, acaricidal or fungicidal composition which comprises an enzyme capable of degrading a protecting or supporting component of a plant, insect or fungal organism, in association with one or more surface active agents, humectants or carriers.

3. A method of combating weeds, insects or fungi, which comprises applying thereto an effective amount of one or more enzymes capable of degrading a protecting or supporting component thereof.

4. The use according to claim 1 of hydrolase enzymes.

5. The use according to claim 4, in herbicidal methods or compositions, of polysaccharidases, lipases, proteinases and esterases.

6. The use according to claim 5 of cellulases, cutinases, pectinases, α-glucosidases, ß-glucosidases, α-galactosidases, ß-galactosidases, ß-glucuronidases, ß-glucanases, dextranases, lipases, phospholipases, renins, trypsins and ficins.

7.  The use according to claim 4, in insecticidal or acaricidal methods or compositions, of polysaccharidases, lipases, proteinases or esterases.

8.  The use according to claim 7 of chitinases, cutinases, α-glucosidases, ß-glucosidases, α-galactosidases, ß-glucuronidases, ß-glucanases, collagenases, lipases, phospholipases, renins, trypsins and ficins.

9.  The use according to claim 4, in fungicidal methods or compositions, of polysaccharidases, lipases, proteinases or esterases.

10.  The use according to claim 9 of cellulases, chitinases, pectinases, lysozymes, α-glucosidases, ß-glucosidases, α-galactosidases, ß-galactosidases, ß-glucuronidases, ß-glucanases, dextranases, collagenases, lipases, phospholipases, renins, trypsins or ficins.

ID 0687I

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 117 600 (FBC LTD.) * Page 1, line 15 - page 2, line 22; page 3, lines 18-20; claims 1,5-10 * | 1-4 | A 01 N 63/00 |
| X | CHEMICAL ABSTRACTS, vol. 83, no. 17, 27th October 1975, page 145, no. 143033n, Columbus, Ohio, US; & JP - A - 75 10 926 (C. IIZUKA et al.) 25-04-1975 * Abstract * | 1-6 | |
| X | GB-A-1 311 375 (PROCTER & GAMBLE) * Page 2, lines 6-89; page 3, line 89 - page 4, line 49; claims * | 1-6 | |
| X | US-A-3 911 110 (W.A. SMIRNOFF) * Column 1, line 52 - column 2, line 33; claims * | 1-4,7, 8 | TECHNICAL FIELDS SEARCHED (Int. Cl.4) A 01 N |
| X | CENTRAL PATENTS INDEX, Basic Abstracts Journal, Section C, AGDOC, Week Y51, December 1977, abstract 91378, Derwent Publications Ltd., London, GB; & JP - A - 77 47 004 (JAPAN PLYWOOD TECHN.) 29-11-1977 * Abstract * | 1-4,7, 8 | |

--- -/-

The present search report has been drawn up for all claims

| Place of search | Date of completion of the search | Examiner |
|---|---|---|
| THE HAGUE | 12-02-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82

| Category | Citation of document with indication, where appropriate, of relevant passages | Relevant to claim | CLASSIFICATION OF THE APPLICATION (Int Cl 4) |
|---|---|---|---|
| X | US-A-3 515 641  (D.R. WHITAKER)  <br><br>* Column 1, lines 34-45; column 3, lines 11-73 * | 1,3,4, 7,8 | |
| X | US-A-4 062 941  (D.A.L. DAVIES)  <br><br>* Column 2, lines 9-65; claims * | 1,3,4, 9,10 | |
| X | GB-A-1 048 887  (GLAXO)  <br><br>* Page 2, lines 92-127 * | 1-4,9, 10 | |
| X | CHEMICAL ABSTRACTS, vol. 79, no. 23, 10th December 1973, page 91, no. 133662v, Columbus, Ohio, US; & JP - A - 73 56 819 (KUMIAI CHEMICAL INDUSTRY CO., LTD.) 09-08-1973 * Abstract * | 1-4,9, 10 | TECHNICAL FIELDS SEARCHED (Int. Cl.4) |
| X | CHEMICAL ABSTRACTS, vol. 81, no. 7, 19th August 1974, page 147, no. 34541q, Columbus, Ohio, US; & JP - A - 73 33 363 (EISAI CO., LTD.) 13-10-1973 * Abstract * | 1-4,9, 10 | |

-/-

The present search report has been drawn up for all claims

| Place of search | Date of completion of the search | Examiner |
|---|---|---|
| THE HAGUE | 12-02-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 3

| Category | Citation of document with indication, where appropriate, of relevant passages | Relevant to claim | CLASSIFICATION OF THE APPLICATION (Int Cl 4) |
|---|---|---|---|
| X | CHEMICAL ABSTRACTS, vol. 97, no. 11, 13th September 1982, page 290, no. 87036r, Columbus, Ohio, US; & JP - A - 82 75 906 (HORIUCHI ISAMU) 12-05-1982 * Abstract * | 1-4,9, 10 | |
| | --- | | |
| X | CENTRAL PATENTS INDEX, Basic Abstracts Journal, Section C, AGDOC, Week B/29, July 1979, abstract 53721, Derwent Publications Ltd., London, GB; & JP - A - 79 73 182 (MITSUI PETROCHEMICAL IND. K.K.) 12-06-1979 * Abstract * | 1-4,9, 10 | |
| | --- | | |
| X | CHEMICAL ABSTRACTS, vol. 97, no. 13, 27th September 1982, page 202, no. 105601c, Columbus, Ohio, US; & JP - A - 82 85 307 (ASAHI DENKA KOGYO K.K.) 28-05-1982 * Abstract * | 1-4,9, 10 | TECHNICAL FIELDS SEARCHED (Int. Cl.4) |
| | --- | | |
| X | CHEMICAL ABSTRACTS, vol. 87, no. 11, 12th September 1977, page 160, no. 79669c, Columbus, Ohio, US; & JP - A - 77 12 245 (INSTITUTE OF PHYSICAL AND CHEMICAL RESEARCH) 06-04-1977 * Abstract * | 1-4,9, 10 | |
| | ----- | | |

The present search report has been drawn up for all claims

| Place of search | Date of completion of the search | Examiner |
|---|---|---|
| THE HAGUE | 12-02-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82